# EUROPEAN PATENT SPECIFICATION

(11) **EP 3 202 233 B1**
(45) Date of publication and mention of the grant of the patent: **15.08.2018**
(21) Application number: 15757490.6
(22) Date of filing: 02.09.2015
(51) Int. Cl.: H05B 6/12, A47J 36/10

(54) **A FOOD PREPARATION APPLIANCE**
VORRICHTUNG ZUR SPEISENZUBEREITUNG
APPAREIL DE PRÉPARATION CULINAIRE

(30) Priority: 02.10.2014 TR 201411727
(43) Date of publication of application: 09.08.2017
(73) Proprietor: Arçelik Anonim Sirketi, 34950 Istanbul (TR)
(72) Inventor: DONMEZ, Ersin, Tuzla 34950 Istanbul (TR); YAMAN, Onur, Tuzla 34950 Istanbul (TR); HAZIR, Sefa, Tuzla 34950 Istanbul (TR); YORUKOGLU, Ahmet, Tuzla 34950 Istanbul (TR)
(86) International application number: PCT/EP2015/070009
(87) International publication number: WO 2016/050438

(56) References cited:
- WO-A1-2014/075923
- JP-A- H09 115 660

## Description

The present invention relates to a food preparation appliance that is operated wirelessly on an induction heating cooker and that is energized from its base.

The use of kitchen appliances that are operated with the principle of wireless power transmission on the induction heating cooker is known. The appliances that acquire smart features by adding the electronic unit save considerable time for preparing foods and beverages. In these appliances wherein energy can also be delivered from the cover, operations like cutting and mixing can be performed. Moreover, in some appliances the motor and the electronic control unit that control cutting and mixing operations are located inside the cover and energy must be transmitted to these components by taking user safety into consideration. In this type of appliances, the cover has to be closed for user safety. In the case the cover is not locked, safety problems and house accidents may occur.

In the state of the art International Patent Application No. WO9601070A1, a pressure cooker is disclosed, comprising a lid locking mechanism that is controlled by a single control member on the lid.

In the state of the art International Patent Application No. WO2014075923A1, a food preparation appliance is disclosed, that is operated wirelessly on an induction heating cooktop.

The aim of the present invention is the realization of a food preparation appliance wherein usage safety is provided.

The food preparation appliance realized in order to attain the aim of the present invention, explicated in the first claim and the respective claims thereof, is a food preparation appliance that operates on an induction heating cooker and comprises a body wherein foods are placed for performing operations like cutting, mixing and cooking and a cover that covers the body. A control unit is provided inside the cover, that enables the control of the required parameters for operating the food preparation appliance. Energy is received through the induction heating cooker by the receiver coils disposed on the base of the body. The energy supplied from the induction heating cooker is transmitted to the control unit inside the cover via a connector composed of a socket and housing. The food preparation appliance comprises a locking mechanism having a socket and/or housing disposed oppositely on the cover or the body, that when inserted into one another provide both mechanical locking between the body and the cover and also electrical transmission between the body and the control unit.

In an embodiment of the present invention, the food preparation appliance comprises at least one actuation member that is disposed on the cover and that enables the user to control the locking mechanism. When the actuation member is actuated by the user, the plate disposed on the cover, the vertical transmitter connected to the plate and the horizontal arm, one end of which is connected to the slot on the transmitter, the other end on the socket, all move. Thus, the socket on the end of the horizontal arm is enabled to be pushed into the housing.

In an embodiment of the present invention, the food preparation appliance comprises a motor disposed inside the cover, whereto the energy received by the receiver coil is transmitted by means of the connector. The said motor supplies energy for the cutting and mixing apparatuses disposed inside the food preparation appliance.

In an embodiment of the present invention, the connector comprises a socket disposed on the cover and a housing disposed on the body.

In an embodiment of the present invention, the movement of the actuation member is transmitted to the plate by means of at least one extension that extends from the actuation member towards the plate.

In an embodiment of the present invention, the food preparation appliance comprises a reinforcement plate having at least one cut-out that guides the extension disposed on the actuation member, thus enabling the movement of the actuation member to be transmitted in the right direction.

In an embodiment of the present invention, a handle comprising a housing is disposed on the body. The handle comprises a protective cover for protecting the housing from external factors.

In an embodiment of the present invention, the food preparation appliance comprises an intermediary cover situated between the body and the cover. By means of the intermediary cover, the cover is insulated from the interior of the body. By means of an opening arranged on the cover and the intermediary cover, aligned on the same level, the user is enabled to access inside the body via the cover.

In an embodiment of the present invention, the food preparation appliance comprises an upper cover that enables the opening located on the cover to be closed. By closing the opening, heat loss from the body to the outside and dispersion of odors outside during preparation and cooking of foods inside the body are prevented.

In the food preparation appliance of the present invention, safe usage is provided by means of the locking mechanism situated on the cover or the body which forms both mechanical and electrical connections.

The food preparation appliance realized in order to attain the aim of the present invention is illustrated in the attached figures, where:

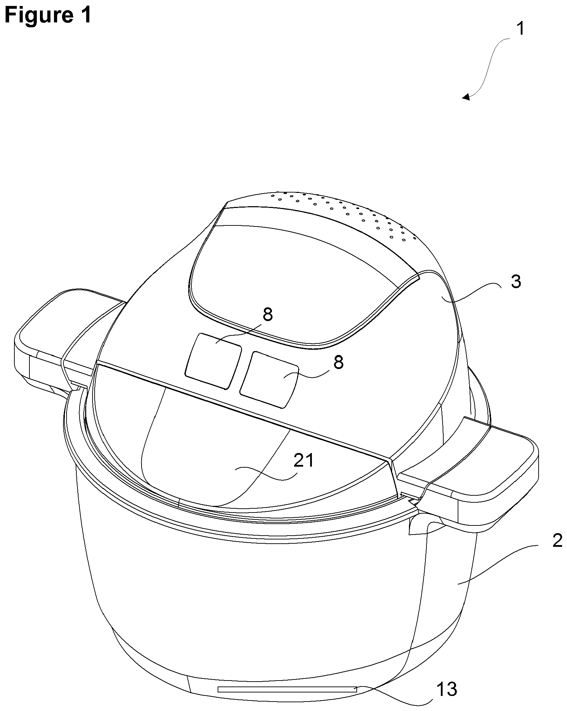

Figure 1- is the perspective view of a food preparation appliance.

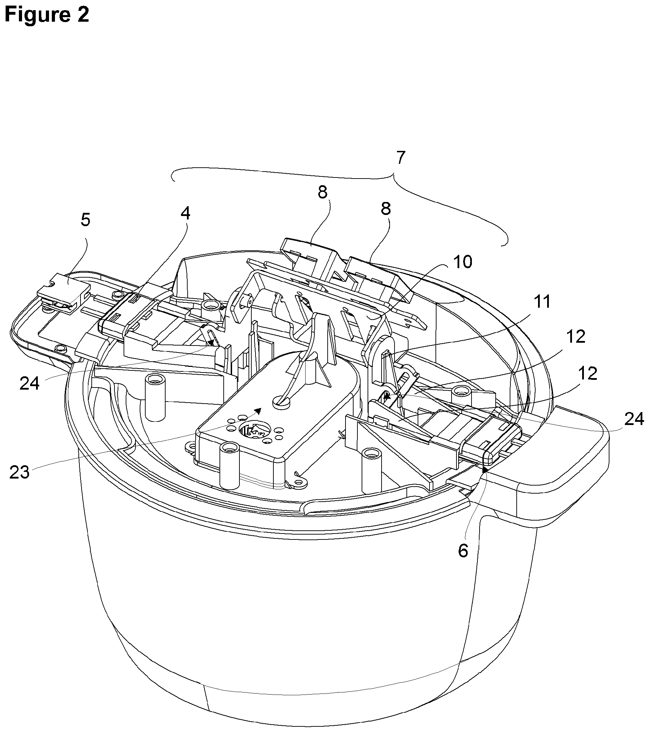

Figure 2 - is the perspective view of the body and the inner side of the cover when the cover is not locked to the body.

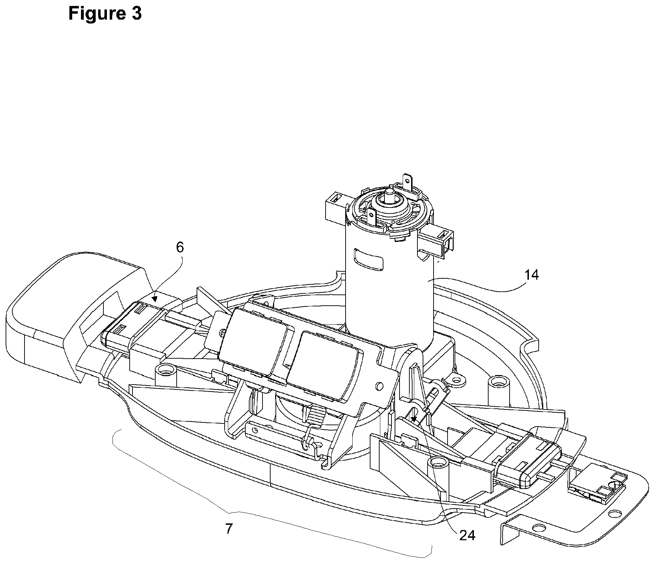

Figure 3 - is the partial perspective view of the inner side of the cover and the motor.

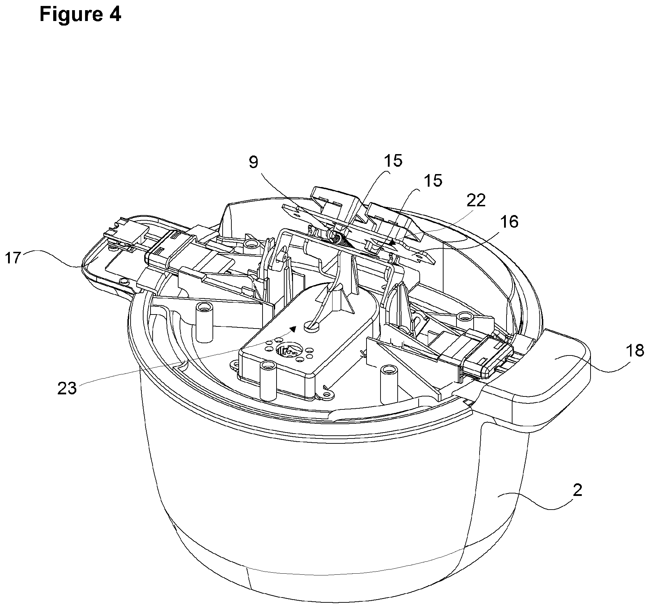

Figure 4 - is the perspective view of the body and the inner side of the cover when the cover is locked to the body.

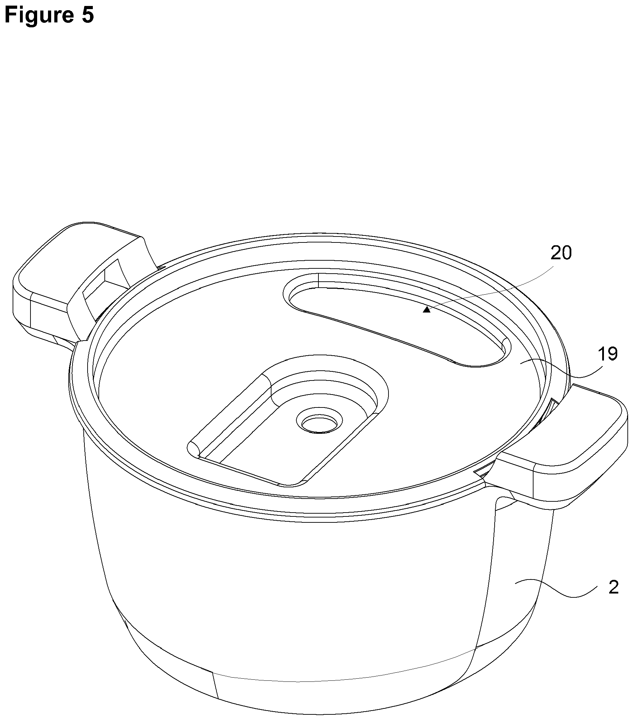

Figure 5 - is the perspective view of an intermediary cover and the body.

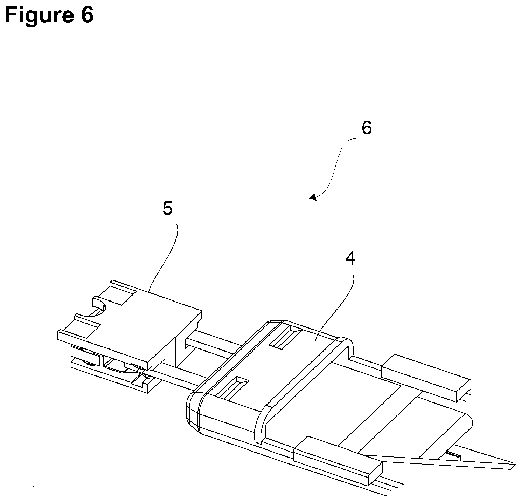

Figure 6 - is the perspective view of a connector.

The elements illustrated in the figures are numbered as follows:
1. Food preparation appliance
2. Body
3. Cover
4. Socket
5. Housing
6. Connector
7. Locking mechanism
8. Actuation member
9. Spring
10. Plate
11. Transmitter
12. Horizontal arm
13. Receiver coil
14. Motor
15. Extension
16. Reinforcement plate
17. Handle
18. Protective cover
19. Intermediary cover
20. Opening
21. Upper cover
22. Cut-out
23. Control unit
24. Slot

The food preparation appliance (1) suitable to be operated on an induction heating cooker comprises a body (2) wherein foods are placed for food preparation operations like cooking, cutting and mixing; a cover (3) mounted over the body (2); a control unit (23) that is situated inside the cover (3) and that provides the control of the operating parameters; one or more than one receiver coil (13) that is disposed on the base of the body (2) and that receives energy from the coils in the induction heating cooker, and a connector (6) that has a socket (4) and a housing (5) and that provides the transmission of the energy received by the receiver coil (13) to the control unit (23). The energy supplied from the receiver coil (13) is transmitted to the control unit (23) inside the cover (3) through the connector (6). In the food preparation appliance (1), components disposed on the cover (3) such as user interface (not shown in the figures), etc. are enabled to be energized by the energy transmission from the body (2) to the control unit (23) in the cover (3).

The food preparation appliance (1) of the present invention comprises a locking mechanism (7) that is disposed oppositely on the cover (3) or the body (2), that enables the socket (4) and/or the housing (5) to be moved, thus the socket (4) and the housing (5) to be inserted into one another and in addition to energy transmission, enabling the cover (3) and the body (2) to be locked to one another. With the socket (4) and the housing (5) being inserted into one another, the connector (6) provides both mechanical locking between the cover (3) and the body (2) and also electrical transmission from the body (2) to the control unit (23) inside the cover (3).

In the active position of the locking mechanism (7), the cover (3) is locked to the body (2) by the socket (4) being inserted into the housing (5) and at the same time energy transmission to the control unit (23) in the cover (3) is provided through the body (2).

In the passive position of the locking mechanism (7), the socket (4) separates from the housing (5) and the energy transmitted to the control unit (23) is cut off before allowing the cover (3) of the food preparation appliance (1) to be opened.

In an embodiment of the present invention, the locking mechanism (7) comprises an actuation member (8) that is disposed on the cover (3) and that enables the user to control the locking mechanism (7); a spring (9) connected to the cover (3); a plate (10) that is disposed on the cover (3) behind the actuation member (8) and connected to the cover (3) by the spring (9); a vertical transmitter (11) connected to the plate (10); an inclined slot (24) that is opened on the transmitter (11) and at least one horizontal arm (12) that extends from the center of the cover (3) towards its sides, one end of the horizontal arm (12) moving in the slot (24) and the other end thereof being connected to the socket (24).

As the user actuates the actuation member (8), the actuation member (8) pushes the plate (10). After moving, the plate (10) connected to the cover (3) by the spring (9) moves the transmitter (11) fastened thereon and the transmitter (11) makes a downward movement with the motion of the plate (10) and activates the horizontal arm (12) that is connected to the slots (24) thereon. The socket (4) is arranged at the end of the horizontal arm (12) and the socket (4) is pushed towards the housing (5) as the horizontal arm (12) is activated.

In an embodiment of the present invention, the food preparation appliance (1) comprises a mixing/slicing apparatus (not shown in the figures) disposed inside the cover (3) and whereto electrical power from the receiver coil (13) is transmitted by means of the connector (6) and a motor (14) that enables the foods in the body (2) to be mixed or sliced. Energy that is produced by the receiver coil (13) on the base of the body (2) receiving magnetic energy from the induction heating cooker is transmitted by means of the connector (6) through the body (2) to the cover (3) and thus the motor (14) is enabled to operate.

In an embodiment of the present invention, the connector (6) comprises the socket (4) disposed on the cover (3) and connected to the locking mechanism (7) and also the housing (5) that is disposed on the body (2). The socket (4) being disposed on the cover (3) and the housing (5) being disposed on the body (2) provide ease in usage and design.

In an embodiment of the present invention, the food preparation appliance (1) comprises at least one extension (15) that extends from the actuation member (8) towards the plate (10) and that provides the transmission of the movement of the actuation member (8) to the plate (10). The extensions (15) are disposed at reverse symmetrical positions on different actuation members (8). Thus, one of the actuation members (8) enables the locking mechanism (7) to change to the active position while the other actuation member (8) enables the locking mechanism (7) to change to the passive position. One of the extensions (15) disposed reverse symmetrically on the actuation members (8) enables the plate (10) to be pushed while the other extension (15) enables the plate (10) to return to its initial position.

In an embodiment of the present invention, the food preparation appliance (1) comprises a reinforcement plate (16) having at least one cut-out (22) that guides the extension (15) and enables the extension (15) to be seated on the plate (10) when the actuation member (8) is actuated. The said reinforcement plate (16) guides the actuation member (8) and enables the movement to be transmitted in the right direction.

In an embodiment of the present invention, the food preparation appliancemachine (1) comprises at least one handle (17) disposed on the body (2) and a protective cover (18) that is mounted on the handle (17) and that enables the housing (5) to be protected from external factors. By means of the protective cover (18), the contact of the housing (5) with the external factors is broken. Thus, in cases when the body (2) contacts with water like being washed in the dishwasher, the housing (5) is not damaged.

In an embodiment of the present invention, the food preparation appliance (1) comprises an intermediary cover (19) that is disposed between the body (2) and the cover (3) and that isolates the cover (3) from the interior of the body (2) during the food preparation process and also an opening (20) that is aligned at the same level on the cover (3) and the intermediary cover (19), that opens from the cover (3) to the intermediary cover (19) and from the intermediary cover (19) to the body (2), thus enabling the user to access the body (2) without opening the cover (3). The user is enables to add foods into the body (2) by means of the opening (20) without opening the cover (3).

In an embodiment of the present invention, the food preparation appliance (1) comprises an upper cover (21) that is disposed on the cover (3), that can be easily opened/ closed by the user, that enables the opening (20) to be closed and enables the user to access the interior of the body (2) while in the open position. By means of the upper cover (21), heat loss to the outside from the body (2) and dispersion of odors of the cooking foods into the environment are prevented.

By means of the present invention, a food preparation appliance (1) is realized comprising a locking mechanism (7) wherein the socket (4) and the housing (5) form both mechanical and electrical connections. The food preparation appliance (1) of the present invention starts to operate by means of the locking mechanism (7) when the socket (4) and the housing (5) are inserted one into other. Again by means of the locking mechanism (7), when the socket (4) and the housing (5) are separated from one another, the energy flow from the body (2) to the cover (3) is interrupted and at the same time the user is enabled to separate the cover (3) from the body (2).

## Claims

1. A food preparation appliance (1) suitable to be operated on an induction heating cooker, **comprising** a body (2) wherein foods are placed for food preparation operations like cooking, cutting and mixing; a cover (3) mounted over the body (2); a control unit (23) that is situated inside the cover (3) and that provides the control of the operating parameters; one or more than one receiver coil (13) that is disposed on the base of the body (2) and that receives energy from the coils in the induction heating cooker, and a connector (6) that has a socket (4) and a housing (5) and that provides the transmission of the energy received by the receiver coil (13) to the control unit (23), **characterized by** a locking mechanism (7) that is disposed oppositely on the cover (3) or the body (2), that enables the socket (4) and/or the housing (5) to be moved, thus the socket (4) and the housing (5) to be inserted into one another and that enables the cover (3) and the body (2) to be locked to one another.

2. A food preparation appliance (1) as in Claim 1, **characterizedby** the locking mechanism (7) comprising an actuation member (8) that is disposed on the cover (3) and that enables the user to control the locking mechanism (7); a spring (9) connected to the cover (3); a plate (10) that is disposed on the cover (3) and connected to the cover (3) by the spring (9); a vertical transmitter (11) connected to the plate (10); a slot (24) that is opened on the transmitter (11) and at least one horizontal arm (12), one end of which moving in the slot (24) and the other end thereof being connected to the socket (24).

3. A food preparation appliance (1) as in Claim 1 or Claim 2, **characterizedby** a motor (14) that is disposed inside the cover (3), whereto electrical power from the receiver coil (13) is transmitted by means of the connector (6).

4. A food preparation appliance (1) as in any one of the above claims, **characterizedby** the connector (6) disposed on the cover (3) and the locking mechanism (7) comprising a socket (4) connected to the locking mechanism (7) and a housing disposed on the body (2).

5. A food preparation appliance (1) as in any one of the above claims, **characterizedby** at least one extension (15) that extends from the actuation member (8) towards the plate (10) and that provides the transmission of the movement of the actuation member (8) to the plate (10).

6. A food preparation appliance (1) as in any one of the above claims, **characterizedby** a reinforcement plate (16) having at least one cut-out (22) that guides the extension (15) and enables the extension (15) to be seated on the plate (10) when the actuation member (8) is actuated.

7. A food preparation appliance (1) as in any one of the above claims, **characterized by a** handle (17) disposed on the body (2) and a protective cover (18) mounted on the handle (17).

8. A food preparation appliance (1) as in any one of the above Claims, **characterized by** an intermediary cover (19) that is disposed between the body (2) and the cover (3) and that isolates the cover (3) from the interior of the body (2) during the food preparation process and also an opening (20) that is aligned at the same level on the cover (3) and the intermediary cover (19), that opens from the cover (3) to the intermediary cover (19) and from the intermediary cover (19) to the body (2), thus enabling the user to access the body (2) without opening the cover (3).

9. A food preparation appliance (1) as in any one of the above claims, **characterizedby** an upper cover (21) enabling the opening (20) on the cover (3) to be closed and enabling the user to access into the body (2) while in the open position.

## Patentansprüche

1. Nahrungsmittelzubereitungsgerät (1), das geeignet ist, an einem Induktionsheizkocher betrieben zu werden, **umfassend** einen Körper (2), wobei Nahrungsmittel für Nahrungsmittelzubereitungsvorgänge wie Kochen, Schneiden und Mischen angeordnet sind; eine Abdeckung (3), die über dem Körper (2) angebracht ist; eine Steuereinheit (23), die sich innerhalb der Abdeckung (3) befindet und die Steuerung von Bedienungsparametern vorsieht; eine oder mehr als eine Empfängerspule (13), die an der Basis des Körpers (2) angeordnet ist und Energie von den Spulen in dem Induktionsheizkocher empfängt, einen Steckverbinder (6), der eine Buchse (4) und ein Gehäuse (5) aufweist und die Übertragung der von der Empfängerspule (13) empfangene Energie zur Steuereinheit (23) vorsieht, **gekennzeichnet durch** einen gegenüber der Abdeckung (3) oder dem Körper (2) angeordneten Verriegelungsmechanismus (7), der es ermöglicht, dass die Buchse (4) und/oder das Gehäuse (5) bewegt sind, also dass die Buchse (4) und das Gehäuse (5) ineinander eingeführt sind und der es ermöglicht, dass die Abdeckung (3) und der Körper (2) miteinander verriegelt sind.

2. Nahrungsmittelzubereitungsgerät (1) nach Anspruch 1, **gekennzeichnet durch** den Verriegelungsmechanismus (7) umfassend ein Betätigungselement (8), das auf der Abdeckung (3) angeordnet ist und es dem Benutzer ermöglicht, den Verriegelungsmechanismus (7) zu steuern; eine Feder (9), die mit der Abdeckung (3) verbunden ist; eine Platte (10), die auf der Abdeckung (3) angeordnet ist und mit der Abdeckung (3) mittels der Feder (9) verbunden ist; einen vertikalen Sender (11), der mit der Platte (10) verbunden ist; einen Schlitz (24), der auf dem Sender (11) geöffnet ist und mindestens einen horizontalen Arm (12), dessen ein Ende sich in den Schlitz (24) bewegt und das andere Ende mit der Buchse (24) verbunden ist.

3. Nahrungsmittelzubereitungsgerät (1) nach Anspruch 1 oder Anspruch 2, **gekennzeichnet durch** einen Motor (14), der in der Abdeckung (3) angeordnet ist, an den elektrische Energie von der Empfängerspule (13) mittels des Steckverbinders (6) übertragen ist.

4. Nahrungsmittelzubereitungsgerät (1) nach einem der vorangehenden Ansprüche, **gekennzeichnet durch** den Steckverbinder (6), der auf der Abdeckung (3) angeordnet ist und den Verriegelungsmechanismus (7), der einen mit dem Verriegelungsmechanismus (7) verbundene Buchse (4) aufweist und ein Gehäuse, das auf dem Körper (2) angeordnet ist.

5. Nahrungsmittelzubereitungsgerät (1) nach einem der vorangehenden Ansprüche, **gekennzeichnet durch** mindestens eine Verlängerung (15), die sich vom Betätigungselement (8) zur Platte (10) erstreckt und die Übertragung der Bewegung des Betätigungselements (8) auf die Platte (10) bewirkt.

6. Nahrungsmittelzubereitungsgerät (1) nach einem der vorangehenden Ansprüche, **gekennzeichnet durch** eine Verstärkungsplatte (16) mit mindestens einer Aussparung (22), die die Verlängerung (15) führt und ermöglicht, dass die Verlängerung (15) auf der Platte (10) sitzt, wenn das Betätigungselement (8) betätigt wird .

7. Nahrungsmittelzubereitungsgerät (1) nach einem der vorangehenden Ansprüche, **gekennzeichnet durch** einen Griff (17), der auf dem Körper (2) angeordnet ist und eine Schutzabdeckung (18), die an dem Griff (17) angebracht ist.

8. Nahrungsmittelzubereitungsgerät (1) nach einem der vorangehenden Ansprüche, **gekennzeichnet durch** die mittlere Abdeckung (19), die zwischen dem Körper (2) und der Abdeckung (3) angeordnet ist und die Abdeckung (3) von der Interieur des Körpers (2) während des Nahrungsmittelzubereitungsvorgans isoliert und eine Öffnung (20), die auf der gleichen Ebene auf der Abdeckung (3) ausgerichtet ist und die mittlere Abdeckung (19), die von der Abdeckung (3) zur mittleren Abdeckung (19) und von der mittleren Abdeckung (19) zum Körper (2) öffnet, somit dem Benutzer Zugriff ins Körper (2) ermöglicht, ohne die Abdeckung (3) zu öffnen.

9. Nahrungsmittelzubereitungsgerät (1) nach einem der vorangehenden Ansprüche, **gekennzeichnet durch** die obere Abdeckung (21), die es ermöglicht, die Öffnung (20) an der Abdeckung (3) zu schließen und dem Benutzer es ermöglicht, in der offenen Position in den Körper (2) zuzugreifen.

## Revendications

1. Appareil de préparation d'aliments (1) pouvant être utilisé sur une cuisinière à chauffage par induction, **comprenant** un corps (2) dans lequel des aliments sont placés pour des opérations de préparation d'aliments telles que la cuisson, la coupe et le mélange; un couvercle (3) monté sur le corps (2); une unité de commande (23) située à l'intérieur du couvercle (3) et assurant le contrôle des paramètres de fonctionnement; une ou plusieurs bobines réceptrices (13) disposées sur la base du corps (2) et recevant l'énergie des bobines dans la cuisinière à chauffage par induction, et un connecteur (6) comportant une douille (4) et un boîtier (5) et qui assure la transmission de l'énergie reçue par la bobine réceptrice (13) à l'unité de commande (23), **caractérisé par** un mécanisme de verrouillage (7) disposé de manière opposée sur le couvercle (3) ou le corps (2), qui permet de déplacer la douille (4) et / ou le boîtier (5), ainsi la douille (4) et le boîtier (5) à insérer l'un dans l'autre et qui permet le verrouillage du couvercle (3) et du corps (2) l'un par rapport à l'autre.

2. Appareil de préparation d'aliments (1) selon la revendication 1, **caractérisé par** le mécanisme de verrouillage (7) comprend un organe d'actionnement (8) disposé sur le couvercle (3) et permettant à l'utilisateur de commander le mécanisme de verrouillage (7); un ressort (9) relié au couvercle (3); une plaque (10) disposée sur le couvercle (3) et reliée au couvercle (3) par le ressort (9); un émetteur vertical (11) connecté à la plaque (10); une fente (24) qui est ouverte sur l'émetteur (11) et au moins un bras horizontal (12) dont une extrémité se déplace dans la fente (24) et l'autre extrémité est connectée à la douille (24).

3. Appareil de préparation d'aliments (1) selon la revendication 1 ou la revendication 2, **caractérisé par** un moteur (14) disposé à l'intérieur du couvercle (3), auquel l'énergie électrique provenant de la bobine réceptrice (13) est transmise au moyen du connecteur (6).

4. Appareil de préparation d'aliments (1) selon l'une quelconque des revendications précédentes, **caractérisé par** le connecteur (6) disposé sur le couvercle (3) et le mécanisme de verrouillage (7) comprenant une douille (4) reliée au mécanisme de verrouillage (7) et un boîtier disposé sur le corps (2).

5. Appareil de préparation d'aliments (1) selon l'une quelconque des revendications précédentes, **caractérisé par** au moins une extension (15) qui s'étend de l'organe d'actionnement (8) vers la plaque (10) et qui assure la transmission du mouvement de la un organe d'actionnement (8) sur la plaque (10).

6. Appareil de préparation d'aliments (1) selon l'une quelconque des revendications précédentes, **caractérisé par** une plaque de renfort (16) comportant au moins une découpe (22) guidant l'extension (15) et permettant de prolonger l'extension (15) assis sur la plaque (10) lorsque l'organe d'actionnement (8) est actionné.

7. Appareil de préparation d'aliments (1) selon l'une quelconque des revendications précédentes, **caractérisé par** une poignée (17) disposée sur le corps (2) et un couvercle de protection (18) monté sur la poignée (17).

8. Appareil de préparation d'aliments (1) selon l'une quelconque des revendications précédentes, **caractérisé par** un couvercle intermédiaire (19) qui est disposé entre le corps (2) et le couvercle (3) et qui isole le couvercle (3) de l'intérieur du corps (2) pendant le processus de préparation des aliments et également une ouverture (20) qui est alignée au même niveau sur le couvercle (3) et le couvercle intermédiaire (19), qui débouche du couvercle (3) au couvercle intermédiaire (19) et du couvercle intermédiaire (19) au corps (2), permettant ainsi à l'utilisateur d'accéder au corps (2) sans ouvrir le couvercle (3).

9. Appareil de préparation d'aliments (1) selon l'une quelconque des revendications précédentes, **caractérisé par** un couvercle supérieur (21) permettant de fermer l'ouverture (20) sur le couvercle (3) et permettant à l'utilisateur d'accéder au corps (2) en position ouverte.
